# DEMANDE DE BREVET EUROPEEN

(11) **EP 1 475 803 A2**
(43) Date de publication de la demande: **10.11.2004**
(21) Numéro de dépôt: 04368036.2
(22) Date de dépôt: 07.05.2004
(51) Int. Cl.: G11B 33/14

(54) **Système interne de sauvegarde et d'archivage sécurisés**

(30) Priorité: 07.05.2003 FR 0305581
(71) Demandeur: DataBase-Bank S.A., 83300 Draguignan (FR)
(72) Inventeur: Sastrel, Frédéric, 83510 Lorgues (FR)
(74) Mandataire: Macquet, Christophe

(57) **Abrégé**

Système de sauvegarde (1) de données informatiques se trouvant dans la mémoire d'un ordinateur, d'un serveur ou d'un dispositif similaire (2) sous la commande d'un logiciel de sauvegarde installé sur l'ordinateur, comprenant un boîtier (15) dans lequel se trouve un disque dur de sauvegarde (10) relié à l'ordinateur ou serveur ou dispositif similaire et destiné à sauvegarder les données informatiques sous la commande du logiciel de sauvegarde et un radiateur à dissipation thermique (14) en contact avec le disque dur, le boîtier étant placé à l'intérieur d'une enceinte ignifuge (20).

## Description

La présente invention concerne un système de sauvegarde de données informatiques et concerne en particulier un système interne de sauvegarde et d'archivage sécurisés.

L'informatique a rendu les systèmes de sauvegarde et d'archivage des données indispensables pour toutes les entreprises. En effet, la perte de données informatiques peut s'avérer lourde de conséquences surtout pour les PME. Pourtant, les causes de perte de données peuvent être nombreuses. Il peut s'agir entres autres d'une erreur d'utilisation, de pannes, de vols de matériel, de virus ou de risques naturels tels que inondation, incendie ou explosion. Pour parer à de telles éventualités, de nombreuses solutions de sauvegarde sont proposées aux entreprises.

Une des solutions consiste à disposer de deux disques durs dont un sert uniquement à la sauvegarde et à l'archivage. Ce type de sauvegarde a l'avantage d'être totalement automatique et de ne pas nécessiter de manipulation manuelle de supports tels qu'une bande. Il présente néanmoins l'inconvénient de se trouver exposé à un vol de matériel ou à un risque naturel.

Une autre solution consiste à effectuer des sauvegardes sur un support de données. Ce support peut être une bande de type DAT, un ZIP ou un CD. Ainsi, une copie de sauvegarde peut être stockée dans un endroit différent du lieu où sont stockées les informations originales. L'inconvénient majeur de ce type de sauvegarde réside dans l'intervention humaine qu'elle nécessite pour le remplacement régulier du support et des risques d'oubli que cela représente. De plus, le support de type bande DAT n'accepte pas tout type de données et les ZIP et les CD ont une petite capacité.

Une troisième solution consiste à externaliser la sauvegarde. De cette façon, l'utilisateur ne gère pas lui-même la sauvegarde, et le support de données n'est plus exposé à une erreur de manipulation ou au vol. Ce mode de sauvegarde s'affranchit des pertes de données dues à un risque naturel. Il a également l'avantage de procurer à l'utilisateur un certain confort puisque celui-ci peut être régulièrement informé des sauvegardes. Les inconvénients de ce type de solution reposent sur le fait que les données sortent de l'entreprise et sur son coût important dû à l'intervention d'une société sous-traitante.

Afin de pouvoir conserver une sauvegarde en interne sur des supports de grande capacité, certaines solutions ont été proposées trouver des systèmes améliorés de sauvegardes au moyen de deux disques durs dont un sert uniquement à la sauvegarde et à l'archivage.

En particulier, le brevet US 5.623.597 décrit un boîtier contenant un disque dur connecté au disque dur d'un ordinateur extérieur pour la sauvegarde des données par l'intermédiaire d'un câble de connexion. Le disque dur est en contact avec un radiateur à dissipation thermique. Cependant, le boîtier constitue l'une des parois du boîtier. Ainsi, la chaleur absorbée par ce radiateur est rayonnée dans l'environnement extérieur. Cette structure ne permet pas de résoudre le problème posé par un accroissement de température. En effet, en supposant que pour une raison quelconque, telle que par exemple un incendie, la température extérieure s'élève à 60°C ou plus, la chaleur absorbée par le radiateur à dissipation thermique ne sera plus rayonnée dans l'environnement extérieur, dans la mesure où la température à l'intérieur de l'enceinte est inférieure à une température d'environ 52°C, température à laquelle le disque dur subit des dommages. C'est le contraire qui se produit, à savoir que la chaleur reçue de l'environnement extérieur par le radiateur à dissipation thermique va se propager vers le disque dur qui se trouve à une température inférieure à celle de l'environnement extérieur et risque donc de l'endommager.

Le brevet US 6.158.833 décrit une enceinte de grandes dimensions puisqu'elle a une surface extérieure de 2,36 m². La chaleur produite par le disque dur est évacuée dans l'environnement de l'enceinte, sans la présence d'un dissipateur thermique. C'est donc par convection que la chaleur est évacuée. Il s'ensuit que le volume de l'enceinte doit être élevé, pour avoir une inertie thermique suffisante pour compenser la chaleur dégagée par le disque dur. Une telle enceinte peut difficilement être déplacée manuellement, ce qui est une condition essentielle en cas d'incendie. De plus la dissipation thermique par convection est beaucoup moins rapide que par conduction avec le dissipateur thermique. Dans ces conditions, il est difficile d'empêcher la température du disque dur en fonctionnement d'augmenter de manière excessive, par exemple à 60°C, du fait que l'évacuation de la chaleur n'est pas assez rapide.

C'est pourquoi le but de l'invention est de fournir un système performant, peu encombrant et sécurisé de sauvegarde automatique de données informatiques, interne à l'entreprise, nécessitant peu d'intervention manuelle et permettant à l'utilisateur d'être automatiquement informé de l'état de la sauvegarde.

Un autre but de l'invention est de fournir un système de sauvegarde protégé contre l'eau et le feu et capable de réguler sa température interne de façon à ce que la température du disque dur n'atteigne pas la température maximum autorisée.

L'objet de l'invention est donc un système de sauvegarde de données informatiques se trouvant dans la mémoire d'un ordinateur, d'un serveur ou d'un dispositif similaire sous la commande d'un logiciel de sauvegarde installé sur l'ordinateur. Ce système comprend un boîtier dans lequel se trouve un disque dur de sauvegarde relié à l'ordinateur ou serveur ou dispositif similaire et destiné à sauvegarder les données informatiques sous la commande du logiciel de sauvegarde et un radiateur à dissipation thermique en contact avec le disque dur, le boîtier étant placé à l'intérieur d'une enceinte ignifuge.

Les buts, objets et caractéristiques de l'invention apparaîtront plus clairement à la lecture de la description qui suit faite en référence aux dessins dans lesquels :
La figure 1 représente en détail le système de sauvegarde et ses moyens de sécurisation selon l'invention,
La figure 2 représente le système de sauvegarde dans son ensemble selon l'invention.

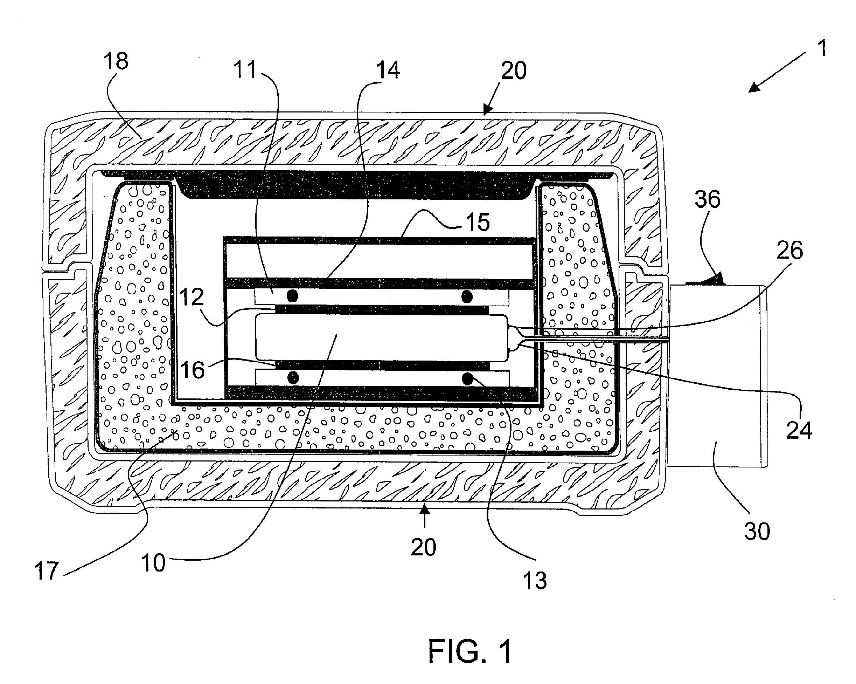

Selon la figure 1, le système selon l'invention comprend un disque dur 10 de type IDE et de capacité de 40 à 250 Giga Octets. D'autres capacités peuvent être envisagées. Préférentiellement celles-ci permettent de sauvegarder la majeure partie des données du disque dur de l'ordinateur. De préférence, le disque dur est un disque tournant à 7200 tours par minute. Sur le disque dur est vissé un radiateur à dissipation thermique 14 classique, par exemple de dimensions 150 mm x 108 mm x 14 mm (L x l x h) et de résistance thermique 2,35 °C/W. Le radiateur peut préférentiellement être constitué d'un aluminium anodisé noir. Afin d'améliorer la superficie de la surface de contact entre le disque dur et le radiateur et ainsi d'améliorer les échanges thermiques du disque dur vers le radiateur 14, une couche de pâte 12, d'épaisseur 1 mm environ, de forte conductivité thermique (de l'ordre de 8 W/m.°K) est insérée entre le disque dur et le radiateur. Le disque dur et le radiateur sont placés dans un boîtier en aluminium 15 de dimension 188 mm x 120 mm x 82 mm (Lxlxh) et d'épaisseur 1 mm. Le radiateur est fixé dans le boîtier à l'aide de vis. Afin d'améliorer les échanges thermiques du radiateur vers le boîtier, il est également possible de rajouter une seconde couche de pâte thermique 16, d'épaisseur 1 mm environ, entre le radiateur et le boîtier. L'ensemble composé du boîtier 15, du radiateur et d'au moins une couche de pâte conductrice 12 et/ou 16 est dimensionné de telle façon qu'il permet de dissiper la chaleur du disque dur en fonctionnement afin que la température à l'intérieur du boîtier soit de l'ordre de 47°C et ne dépasse jamais 52°C.

Des résultats particulièrement performants ont été obtenus en utilisant un boîtier 15 constitué d'une fonte d'aluminium de type de l'alliage d'aluminium LM24.

Selon un mode préférentiel de réalisation et afin d'améliorer davantage les échanges thermiques du radiateur 14 vers le boîtier 15, il est également possible d'insérer un diffuseur thermique 11 entre la pâte thermique 12 et le radiateur. Le diffuseur thermique est en contact avec le boîtier 15 par l'intermédiaire de vis de fixation 13 et peut également être en contact direct avec le boîtier 15. Ainsi, la chaleur diffusée par le disque dur 10 sera transmise à la pâte thermique 12, qui transmettra à son tour la chaleur au diffuseur thermique 11. La chaleur sera alors non seulement diffusée vers le radiateur 14, mais également vers le boîtier 15, via le contact avec le diffuseur thermique 11. Le boîtier 15 absorbera alors également une partie de l'énergie diffusée par le disque dur.

A noter qu'il est préférable de placer dans le boîtier 15, un sachet rempli d'un matériau absorbeur d'humidité pour préserver le disque dur en cas d'humidité relative de l'air excessive.

Le disque dur 10, dans son boîtier 15 est placé dans une enceinte ignifuge et étanche 20 munie d'une ouverture. Les dimensions externes de l'enceinte sont par exemple de l'ordre de 360 mm x 280 mm x 21 mm (L x l x h). L'enceinte ignifuge 20 est composée d'une couche fine d'un matériau dur et résistant au choc, tel que du polyéthylène haute densité tapissée à l'intérieur d'un matériau ignifuge de préférence selon deux couches. La couche interne 17 est composée d'une matière ignifuge d'épaisseur 4 cm et la couche externe 18 est composée d'une matière ignifuge d'épaisseur 3 cm. Le matériau ignifuge composant les couches 17 et 18 est de préférence composé de ciment Portland et capable de résister au feu.

Selon un autre mode de réalisation, la couche externe 18 comprend un sable réfractaire durcissant sous l'effet de la chaleur, permettant notamment une meilleure protection contre l'incendie.

De même, il est particulièrement avantageux d'utiliser un matériau de refroidissement pour la composition de la chambre interne 17. Ce matériau permet de refroidir la chambre interne. Ce matériau peut notamment avoir une structure physique ou chimique se modifiant au-dessus de 50°C, cette modification entraînant une baisse de la température et permettant de maintenir l'espace où se situe le boîtier 15 à une température inférieure à 52°C . Ce matériau de refroidissement peut notamment être un gravillon chargé d'humidité qui diffuse son humidité au-dessus de 50°C.

L'étanchéité de l'enceinte 20 contre les projections d'eau s'opère au moment de la fermeture de l'enceinte. Le disque dur est relié à une interface externe 30 par l'intermédiaire d'un ou plusieurs moyens permettant d'alimenter électriquement le disque dur et de lui transmettre des données. Il peut notamment s'agir d'un premier câble d'alimentation 24 transportant un courant de 5V et d'un moyen de transmission de donnée tel qu'un deuxième câble de type nappe IDE 26. Le moyen de transmission de données peut également un moyen de transmission sans contact. Le passage des deux câbles 24 et 26 du boîtier 15 vers l'extérieur de l'enceinte 20 représente un pont thermique entre le boîtier et l'extérieur. L'interface externe 30 comprend une carte d'alimentation, une carte de gestion des données, telle qu'une carte USB, et un interrupteur 36. Elle est fixée à une des parois de l'enceinte, de préférence du côté l'extérieur. Afin de rompre ce pont et de parfaire l'isolation thermique de l'ensemble, une couche de mastic réfractaire 22 est injectée dans l'évidement de l'enceinte 20 où sortent les câbles 24 et 26.

L'interface externe 30 permet de brancher un câble d'alimentation à une source d'alimentation en continu de 12V et un câble USB à un ordinateur 2.

Il est à noter que la transmission de données de l'ordinateur peut également être faite par d'autres câbles que des câbles USB, ou par d'autres moyens de transmission de données. L'important est que les données puissent être transmises de l'ordinateur au disque dur 10.

Une fois le boîtier et son contenu comme décrit plus haut placé dans l'enceinte 20 fermée, l'ensemble est isolé thermiquement de l'extérieur de telle sorte que, placé dans des conditions extrêmes telles qu'un incendie, la température à l'intérieur du boîtier 15 soit maintenue à une température inférieure à 52°C dans des conditions normales de température ambiante extérieure. Des essais réalisés pendant une durée totale de 17 jours pendant lesquels le disque dur a été sollicité 24h/24 ont permis de mettre en évidence une température ne dépassant pas 43°C. Or, un disque dur en fonctionnement normal dissipe le maximum de chaleur pendant la période où il travaille, c'est-à-dire pendant la sauvegarde et éventuellement pendant la lecture des données.

Dé même, lorsque l'enceinte ignifuge 20 est exposée à un feu de 850°C pendant ½ heure la température à l'intérieur du boîtier (15) ne dépasse pas 52°C.

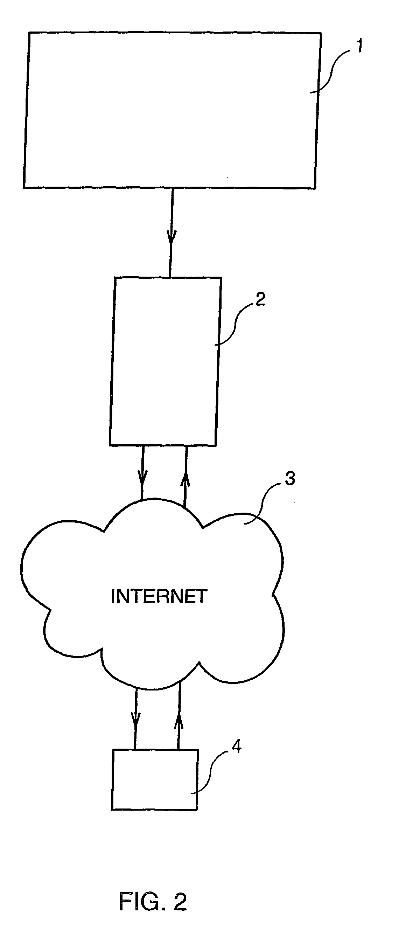

L'utilisateur sauvegarde ainsi les données informatiques de son ordinateur ou de son serveur 2 dans le disque dur 10 de façon régulière, de préférence quotidienne, grâce à un logiciel de sauvegarde préalablement installé et paramétré dans le disque dur 10. Un logiciel de contrôle et d'alerte est également installé sur l'ordinateur 2. Ce logiciel contrôle si la sauvegarde a bien été effectuée. En référence à la figure 2, par l'intermédiaire d'une connexion internet 3 de l'ordinateur 2, ce logiciel permet également d'informer automatiquement au moins un utilisateur par l'envoi d'un message électronique, via un serveur approprié 4, des informations sur la sauvegarde telles que la date et l'heure, le nombre de fichiers sauvegardés, le taux de compression et la place disponible restante du disque dur. Aucune information concernant le contenu de la sauvegarde n'est disponible. Par l'intermédiaire d'un site web et du serveur 4, l'utilisateur peut lui-même choisir la liste de personnes à informer de la sauvegarde. Si aucun message ne parvient à l'utilisateur (ou les utilisateurs) dans le délai d'une période de sauvegarde, dans notre exemple sur une période de 24 heures, un message d'alerte est automatiquement envoyé à l'utilisateur par le serveur 4.

Ce logiciel de contrôle à l'avantage de pouvoir informer les utilisateurs à distance de l'état des sauvegardes effectuées sans qu'il soit possible, à aucun moment, d'avoir accès au contenu de la sauvegarde.

Le système de sauvegarde selon l'invention dispose également de moyens pour se prémunir du vol d'informations. En effet, lorsque les informations sont sauvegardées, un logiciel de cryptage crypte les données sauvegardées les rendant ainsi illisibles. Ainsi, si une personne mal intentionnée s'empare du système de sauvegarde 1, il ne peut exploiter les informations du disque. De plus, les logiciels de sauvegarde et de contrôle et d'alerte sont des logiciels propriétaires disposant d'un login. Donc, seul l'utilisateur propriétaire de l'ordinateur 2 a la possibilité de décrypter les informations du disque dur et ainsi de les lire. Il est également possible de munir le système de sauvegarde 1 d'un antivol de façon à ce que l'enceinte 20 soit verrouillée. Selon un mode d'anti-vol supplémentaire, l'enceinte 20 est scellée au sol.

Dans un mode de réalisation préféré de l'invention, l'enceinte 20 à la forme d'une valise. Ainsi, le système de sauvegarde selon l'invention a l'avantage d'être facilement transportable, d'autant plus que son poids total reste inférieur à 20 kg. Ce système peut être déconnecté facilement de l'ordinateur et être facilement transporté séparément, notamment dans des conditions d'évacuation.

Dans un autre mode réalisation de l'invention, l'enceinte ignifuge 20 est un coffre de la gamme de produit SENTRY FIRE-SAFE n°1710 homologué UL (Underwriters Laboratories). Dans un tel coffre, la couche externe 18 est constituée préférentiellement par du Survivacast (TM), qui est une sorte de sable réfractaire durcissant sous l'effet de la chaleur. La couche interne 17 correspond à une chambre d'isolation contenant un matériau tel que du Pyronox (TM), qui est un gravillon chargé d'humidité qui diffuse son humidité au-dessus de 50°C. Une fois le coffre fermé la couche interne constitue également une enceinte étanche lorsque le coffre est fermé, grâce à un joint en Pyronox (TM), placé sur le couvercle du coffre.

Les pâtes thermiques 12 et 16 préférentiellement utilisées sont des pâtes dites à effet Peltier. Ce type de pâte ne contient aucun silicone et est composé de plusieurs sortes de conducteurs thermique, notamment d'oxyde d'aluminium, de nitrite de boron et d'oxyde de zinc ce qui confère de meilleures performances que des graisses thermiques de base.

Afin de doubler les capacités de sauvegarde, il est également possible de disposer de deux disques durs de capacité 40, 80 ou 120 Giga Octets de type IDE et tournant de préférence chacun à 7200 tours par minute dans une enceinte ignifuge de dimension plus grande. Dans ce cas, chaque disque dur fixé à un radiateur est placé dans un boîtier en aluminium de la même façon que décrit précédemment pour un seul disque dur. Les deux boîtiers sont alors placés côte à côte dans une enceinte ignifuge tapissée d'au moins deux couches de matériau capable de résister au feu. Comme pour le système de sauvegarde muni d'un seul disque dur, les deux disques sont reliés à une interface externe par l'intermédiaire d'un câble d'alimentation et d'un câble de transmission de données, tel qu'une nappe IDE. L'interface externe, fixée sur une des parois de l'enceinte est munie d'une carte réseau et d'une carte d'alimentation, et est reliée à un ordinateur, un serveur ou un dispositif similaire contenant les données à sauvegarder. Les dimensions externes de l'enceinte sont alors de l'ordre de 390 mm x 310 mm x 35 mm (L x l x h).

## Revendications

1. Système de sauvegarde (1) de données informatiques se trouvant dans la mémoire d'un ordinateur, d'un serveur ou d'un dispositif similaire (2) sous la commande d'un logiciel de sauvegarde installé sur ledit ordinateur, ledit système comprenant un boîtier (15) dans lequel se trouve un disque dur de sauvegarde (10) destiné à sauvegarder lesdites données informatiques sous la commande dudit logiciel de sauvegarde et un radiateur à dissipation thermique (14) en contact avec ledit disque dur, ledit disque dur étant relié audit ordinateur ou serveur ou dispositif similaire à travers une interface externe (30) par l'intermédiaire de moyens d'alimentation et/ou de transmission de données (24, 26);
ledit système étant **caractérisé en ce que** ledit boîtier est placé à l'intérieur d'une enceinte ignifuge (20) et ledit radiateur à dissipation thermique diffuse la chaleur produite par le disque dur (10) vers ledit boîtier (15) par l'intermédiaire d'au moins une couche de pâte (12 ou 16) de conductivité thermique de l'ordre de 8 W/m.°K.

2. Système de sauvegarde (1) selon la revendication 1, dans lequel ledit boîtier est en aluminium et est placé à l'intérieur d'une chambre ignifuge et étanche (17 et 18) de ladite enceinte (20).

3. Système de sauvegarde (1) selon la revendication 1, dans lequel ledit boîtier est en fonte d'aluminium, tel qu'un alliage d'aluminium de type LM24, et est placé à l'intérieur d'une chambre ignifuge et étanche (17 et 18) de ladite enceinte (20).

4. Système de sauvegarde (1) selon la revendication 1 à 3, dans lequel un logiciel de contrôle et d'alerte est installé sur l'ordinateur, le serveur ou le dispositif similaire (2) et permet, par l'intermédiaire du réseau internet (3) et d'un serveur (4) d'envoyer des messages électroniques à au moins un utilisateur pour d'une part l'informer automatiquement de l'état de la sauvegarde et d'autre part de l'alerter automatiquement en cas de non réalisation de la sauvegarde, sans qu'il soit possible d'avoir accès au contenu de la sauvegarde.

5. Système selon la revendication l'une des revendications précédentes, dans lequel ladite interface externe est fixée sur une des parois de ladite enceinte (20).

6. Système de sauvegarde (1) selon l'une des revendications précédentes, dans lequel ladite enceinte (20) est une valise.

7. Système de sauvegarde (1) selon la revendication 2, dans lequel ladite chambre ignifuge et étanche (17 et 18) est composée d'au moins deux couches indépendantes de matériau ignifuge.

8. Système de sauvegarde (1) selon la revendication 7, dans lequel parmi les couches indépendantes, la couche externe (18) comprend un sable réfractaire durcissant sous l'effet de la chaleur, permettant notamment une meilleure protection contre l'incendie.

9. Système de sauvegarde (1) selon la revendication 7 ou 8, dans lequel parmi les couches indépendantes, la couche interne (17) comprend un matériau de refroidissement pour refroidir la chambre interne, la structure physique ou chimique dudit matériau de refroidissement étant modifiée au-dessus de 50°C, cette modification entraînant une baisse de la température et permettant de maintenir l'espace où se situe le boîtier (15) à une température inférieure à 52°C.

10. Système de sauvegarde (1) selon la revendication 9, dans lequel ledit matériau de refroidissement est un gravillon chargé d'humidité qui diffuse son humidité au-dessus de 50°C.

11. Système de sauvegarde (1) selon la revendication 2 ou 6, dans lequel ladite interface externe (30) est composée d'une carte de gestion de transmission de données, telle qu'une carte USB et d'une carte d'alimentation.

12. Système de sauvegarde (1) selon la revendication 2, 6 ou 7, dans lequel les moyens d'alimentation et/ou de transmission de données (24, 26) sont des câbles de connexion isolés thermiquement de l'extérieur dudit boîtier (15) par l'intermédiaire d'un mastic réfractaire (22).

13. Système de sauvegarde (1) selon l'une des revendications précédentes, dans lequel les données sauvegardées dans le disque dur (10) sont cryptées grâce à un logiciel de cryptage de l'ordinateur (2).

14. Système de sauvegarde (1) selon l'une des revendications précédentes, dans lequel deux disques durs fixés chacun à un radiateur à dissipation thermique sont placés chacun à l'intérieur d'un boîtier en aluminium, ledit boîtier étant placé à l'intérieur d'une chambre ignifuge et étanche d'une enceinte et lesdits disques durs sont reliés à une interface externe par l'intermédiaire d'un câble d'alimentation et d'un moyen de transmission de donnée, tel qu'une nappe IDE, ladite interface externe étant fixée sur une des parois de ladite enceinte (20).

15. Système de sauvegarde (1) selon l'une des revendications précédentes, dans lequel l'enceinte (20) contenant au moins un disque dur est verrouillée à l'aide d'un anti-vol.

16. Système de sauvegarde (1) selon l'une des revendications précédentes, comprenant également un dissipateur thermique (11) placé entre la pâte thermique (12) et le radiateur (14), ledit diffuseur thermique étant en contact avec le boîtier (15) directement et/ou au moyen de vis de fixation (13); de sorte que la chaleur diffusée par le disque dur (10) est non seulement diffusée vers le radiateur, mais également vers le boîtier, via le contact avec le diffuseur thermique.
